# EUROPEAN PATENT APPLICATION

(11) **EP 3 306 463 A1**
(43) Date of publication of application: **11.04.2018**
(21) Application number: 15893672.4
(22) Date of filing: 01.06.2015
(51) Int. Cl.: G06F 3/14

(54) **METHOD AND DEVICE FOR PROCESSING MULTIMEDIA**

(71) Applicant: Huawei Technologies Co. Ltd., Shenzhen, Guangdong 518129 (CN)
(72) Inventor: LIU, Jie, Shenzhen Guangdong 518129 (CN)
(74) Representative: Gill Jennings & Every LLP
(86) International application number: PCT/CN2015/080518
(87) International publication number: WO 2016/192013

(57) **Abstract**

Embodiments of the present invention provide a multimedia processing method and apparatus. A behavior change of a multimedia viewer is monitored, specific content of multimedia is identified according to the behavior change of the multimedia viewer, and the specific content of the multimedia is processed. Corresponding processing may be performed on the specific content of the multimedia according to the behavior change of the multimedia viewer. Therefore, multiple watching manners are provided, and intelligentization of human-computer interaction is improved.

## Description

### TECHNICAL FIELD

Embodiments of the present invention relate to communications technologies, and in particular, to a multimedia processing method and apparatus.

### BACKGROUND

With rapid development of a computer network technology, people get increasingly accustomed to watching multimedia on a network. There are multiple scenarios of watching a video, such as directly watching live broadcast on line, watching rebroadcast on line, or watching a video after downloading video resources locally from a network.

In the prior art, only a single video watching manner is provided on video websites for a user, for example, during online watching of live broadcast, played videos cannot be played back, and a user may miss some highlights because of leaving away for something. During online watching of rebroadcast or in a watching process after downloading video resources locally from a network, if a user wants to selectively watch, for example, only a highlight, the user can watch the highlight only by fast-forwarding or drag a progress bar, and cannot directly locate the highlight.

Therefore, a watching manner provided in a multimedia processing method in the prior art is undiversified, and human-computer interaction is not intelligent enough.

### SUMMARY

Embodiments of the present invention provide a multimedia processing method and apparatus, so as to improve intelligentization of human-computer interaction.

A first aspect of the embodiments of the present invention provides a multimedia processing method, including:
monitoring a behavior change of a multimedia viewer;
identifying specific content of multimedia according to the behavior change of the multimedia viewer; and
processing the specific content of the multimedia.

With reference to the first aspect, in a first possible implementation manner of the first aspect, the specific content is content of a first part or content of a second part, and the processing the specific content of the multimedia includes:
storing the content of the first part of the multimedia according to the behavior change of the multimedia viewer; or
marking the content of the second part of the multimedia according to the behavior change of the multimedia viewer.

With reference to the first possible implementation manner of the first aspect, in a second possible implementation manner of the first aspect, the storing the content of the first part of the multimedia according to the behavior change of the multimedia viewer includes:
if it is detected in a first time that a behavior of the multimedia viewer changes from watching multimedia to not watching multimedia, and it is detected in a second time that the behavior of the multimedia viewer changes from not watching multimedia to watching multimedia, and if a time interval between the first time and the second time is greater than a first preset threshold, storing multimedia content in a time period from the first time to the second time.

With reference to the second possible implementation manner of the first aspect, in a third possible implementation manner of the first aspect, when there is one multimedia viewer,
the detecting that a behavior of the multimedia viewer changes from watching multimedia to not watching multimedia includes:
if it is detected that an included angle between a facial image of the multimedia viewer and a screen of a multimedia player changes from being less than or equal to a first preset angle to being greater than the first preset angle, determining that the behavior of the multimedia viewer changes from watching multimedia to not watching multimedia; or
if it is detected that a distance between a facial image of the multimedia viewer and the screen of the multimedia player changes from being less than or equal to a first preset distance to being greater than the first preset distance, determining that the behavior of the multimedia viewer changes from watching multimedia to not watching multimedia; or
if it is detected that a line of sight of the multimedia viewer changes from being within a display area of the screen to being out of the display area of the screen, determining that the behavior of the multimedia viewer changes from watching multimedia to not watching multimedia; and
the detecting that the behavior of the multimedia viewer changes from not watching multimedia to watching multimedia includes:
if it is detected that an included angle between a facial image of the multimedia viewer and a screen of a multimedia player changes from being greater than a first preset angle to being less than or equal to the first preset angle, determining that the behavior of the multimedia viewer changes from not watching multimedia to watching multimedia; or
if it is detected that a distance between a facial image of the multimedia viewer and the screen of the multimedia player changes from being greater than a first preset distance to being less than or equal to the first preset distance, determining that the behavior of the multimedia viewer changes from not watching multimedia to watching multimedia; or
if it is detected that a line of sight of the multimedia viewer changes from being out of a display area of the screen to being within the display area of the screen, determining that the behavior of the multimedia viewer changes from not watching multimedia to watching multimedia.

With reference to the third possible implementation manner of the first aspect, in a fourth possible implementation manner of the first aspect, before the detecting in a second time that the behavior of the multimedia viewer changes from not watching multimedia to watching multimedia, the method further includes:
determining that the multimedia viewer detected in the second time and the multimedia viewer detected in the first time are a same viewer.

With reference to the second possible implementation manner of the first aspect, in a fifth possible implementation manner of the first aspect, when there are at least two multimedia viewers,
the detecting that a behavior of the multimedia viewer changes from watching multimedia to not watching multimedia includes:
if it is detected that included angles between facial images of a quantity of persons in the multimedia viewers and a screen of a multimedia player change from being less than or equal to a first preset angle to being greater than the first preset angle, where the quantity is greater than a preset quantity of persons, determining that the behavior of the multimedia viewer changes from watching multimedia to not watching multimedia; or
if it is detected that distances between facial images of a quantity of persons in the multimedia viewers and the screen of the multimedia player change from being less than or equal to a first preset distance to being greater than the first preset distance, where the quantity is greater than the preset quantity of persons, determining that the behavior of the multimedia viewer changes from watching multimedia to not watching multimedia; or
if it is detected that lines of sight of a quantity of persons in the multimedia viewers change from being within a display area of the screen to being out of the display area of the screen, where the quantity is greater than the preset quantity of persons, determining that the behavior of the multimedia viewer changes from watching multimedia to not watching multimedia; and
the detecting that the behavior of the multimedia viewer changes from not watching multimedia to watching multimedia includes:
if it is detected that included angles between facial images of a quantity of persons in the multimedia viewers and a screen of a multimedia player change from being greater than a first preset angle to being less than or equal to the first preset angle, where the quantity is greater than a preset quantity of persons, determining that the behavior of the multimedia viewer changes from not watching multimedia to watching multimedia; or
if it is detected that distances between facial images of a quantity of persons in the multimedia viewers and the screen of the multimedia player change from being greater than a first preset distance to being less than or equal to the first preset distance, where the quantity is greater than the preset quantity of persons, determining that the behavior of the multimedia viewer changes from not watching multimedia to watching multimedia; or
if it is detected that lines of sight of a quantity of persons in the multimedia viewers change from being out of a display area of the screen to being within the display area of the screen, where the quantity is greater than the preset quantity of persons, determining that the behavior of the multimedia viewer changes from not watching multimedia to watching multimedia.

With reference to the first possible implementation manner of the first aspect, in a sixth possible implementation manner of the first aspect, the marking the content of the second part of the multimedia according to the behavior change of the multimedia viewer includes:
if it is detected in a third time that an emotional expression of the multimedia viewer changes from being calm to being uncalm, and it is detected in a fourth time that the emotional expression of the multimedia viewer changes from being uncalm to being calm, marking played multimedia content in a time period from the third time to the fourth time as a candidate highlight; and
if times of marking the played multimedia content in the time period from the third time to the fourth time as the candidate highlight are greater than or equal to a second preset threshold, marking the candidate highlight as a highlight.

With reference to the sixth possible implementation manner of the first aspect, in a seventh possible implementation manner of the first aspect, the marking the candidate highlight as a highlight includes:
generating a play heat curve of the multimedia according to a time interval of the highlight in play progress of the multimedia; or
generating a multimedia thumbnail in the time interval in the time interval of the highlight in the play progress of the multimedia.

A second aspect of the embodiments of the present invention provides a multimedia processing apparatus, including:
a monitoring module, configured to monitor a behavior change of a multimedia viewer;
an identifying module, configured to identify specific content of multimedia according to the behavior change of the multimedia viewer; and
a processing module, configured to process the specific content of the multimedia.

With reference to the second aspect, in a first possible implementation manner of the second aspect, the specific content is content of a first part or content of a second part, and the processing module includes:
a storage unit, configured to store the content of the first part of the multimedia according to the behavior change of the multimedia viewer; or
a marking unit, configured to mark the content of the second part of the multimedia according to the behavior change of the multimedia viewer.

With reference to the first possible implementation manner of the second aspect, in a second possible implementation manner of the second aspect, the storage unit is specifically configured to: if the monitoring module detects in a first time that a behavior of the multimedia viewer changes from watching multimedia to not watching multimedia, and detects in a second time that the behavior of the multimedia viewer changes from not watching multimedia to watching multimedia, and if a time interval between the first time and the second time is greater than a first preset threshold, store played multimedia content in a time period from the first time to the second time.

With reference to the second possible implementation manner of the second aspect, in a third possible implementation manner of the second aspect, when there is one multimedia viewer,
the monitoring module is specifically configured to: if it is detected that an included angle between a facial image of the multimedia viewer and a screen of a multimedia player changes from being less than or equal to a first preset angle to being greater than the first preset angle, determine that the behavior of the multimedia viewer changes from watching multimedia to not watching multimedia; or
the monitoring module is specifically configured to: if it is detected that a distance between a facial image of the multimedia viewer and the screen of the multimedia player changes from being less than or equal to a first preset distance to being greater than the first preset distance, determine that the behavior of the multimedia viewer changes from watching multimedia to not watching multimedia; or
the monitoring module is specifically configured to: if it is detected that a line of sight of the multimedia viewer changes from being within a display area of the screen to being out of the display area of the screen, determine that the behavior of the multimedia viewer changes from watching multimedia to not watching multimedia; and
the monitoring module is specifically configured to: if it is detected that an included angle between a facial image of the multimedia viewer and a screen of a multimedia player changes from being greater than a first preset angle to being less than or equal to the first preset angle, determine that the behavior of the multimedia viewer changes from not watching multimedia to watching multimedia; or
the monitoring module is specifically configured to: if it is detected that a distance between a facial image of the multimedia viewer and the screen of the multimedia player changes from being greater than a first preset distance to being less than or equal to the first preset distance, determine that the behavior of the multimedia viewer changes from not watching multimedia to watching multimedia; or
the monitoring module is specifically configured to: if it is detected that a line of sight of the multimedia viewer changes from being out of a display area of the screen to being within the display area of the screen, determine that the behavior of the multimedia viewer changes from not watching multimedia to watching multimedia.

With reference to the third possible implementation manner of the second aspect, in a fourth possible implementation manner of the second aspect, the monitoring module is further configured to determine that the multimedia viewer detected in the second time and the multimedia viewer detected in the first time are a same viewer.

With reference to the second possible implementation manner of the second aspect, in a fifth possible implementation manner of the second aspect, when there are at least two multimedia viewers,
the monitoring module is specifically configured to: if it is detected that included angles between facial images of a quantity of persons in the multimedia viewers and a screen of a multimedia player change from being less than or equal to a first preset angle to being greater than the first preset angle, where the quantity is greater than a preset quantity of persons, determine that the behavior of the multimedia viewer changes from watching multimedia to not watching multimedia; or
the monitoring module is specifically configured to: if it is detected that distances between facial images of a quantity of persons in the multimedia viewers and the screen of the multimedia player change from being less than or equal to a first preset distance to being greater than the first preset distance, where the quantity is greater than the preset quantity of persons, determine that the behavior of the multimedia viewer changes from watching multimedia to not watching multimedia; or
the monitoring module is specifically configured to: if it is detected that lines of sight of a quantity of persons in the multimedia viewers change from being within a display area of the screen to being out of the display area of the screen, where the quantity is greater than the preset quantity of persons, determine that the behavior of the multimedia viewer changes from watching multimedia to not watching multimedia; and
the monitoring module is specifically configured to: if it is detected that included angles between facial images of a quantity of persons in the multimedia viewers and a screen of a multimedia player change from being greater than a first preset angle to being less than or equal to the first preset angle, where the quantity is greater than a preset quantity of persons, determine that the behavior of the multimedia viewer changes from not watching multimedia to watching multimedia; or
the monitoring module is specifically configured to: if it is detected that distances between facial images of a quantity of persons in the multimedia viewers and the screen of the multimedia player change from being greater than a first preset distance to being less than or equal to the first preset distance, where the quantity is greater than the preset quantity of persons, determine that the behavior of the multimedia viewer changes from not watching multimedia to watching multimedia; or
the monitoring module is specifically configured to: if it is detected that lines of sight of a quantity of persons in the multimedia viewers change from being out of a display area of the screen to being within the display area of the screen, where the quantity is greater than the preset quantity of persons, determine that the behavior of the multimedia viewer changes from not watching multimedia to watching multimedia.

With reference to the first possible implementation manner of the second aspect, in a sixth possible implementation manner of the second aspect, the marking unit is specifically configured to: if the monitoring module detects in a third time that an emotional expression of the multimedia viewer changes from being calm to being uncalm, and detects in a fourth time that the emotional expression of the multimedia viewer changes from being uncalm to being calm, mark played multimedia content in a time period from the third time to the fourth time as a candidate highlight; and if times of marking the played multimedia content in the time period from the third time to the fourth time as the candidate highlight are greater than or equal to a second preset threshold, mark the candidate highlight as a highlight.

With reference to the sixth possible implementation manner of the second aspect, in a seventh possible implementation manner of the second aspect, the marking unit is specifically configured to generate a play heat curve of the multimedia according to a time interval of the highlight in play progress of the multimedia; or
the marking unit is specifically configured to generate a multimedia thumbnail in the time interval in the time interval of the highlight in the play progress of the multimedia.

According to the multimedia processing method and apparatus in the embodiments of the present invention, a behavior change of a multimedia viewer is monitored, specific content of multimedia is identified according to the behavior change of the multimedia viewer, and the specific content of the multimedia is processed. Corresponding processing may be performed on the specific content of the multimedia according to the behavior change of the multimedia viewer. Therefore, multiple watching manners are provided, and intelligentization of human-computer interaction is improved.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a schematic flowchart of Embodiment 1 of a multimedia processing method according to the present invention;
FIG. 2 is a schematic flowchart of Embodiment 2 of a multimedia processing method according to the present invention;
FIG. 3 is a schematic flowchart of Embodiment 3 of a multimedia processing method according to the present invention;
FIG. 4 is a schematic structural diagram of Embodiment 1 of a multimedia processing apparatus according to the present invention;
FIG. 5 is a schematic structural diagram of Embodiment 2 of a multimedia processing apparatus according to the present invention; and
FIG. 6 is a schematic structural diagram of Embodiment 3 of a multimedia processing apparatus according to the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by persons of ordinary skill in the art based on the embodiments of the present invention without creative efforts shall fall within the protection scope of the present invention.

Multimedia in the present invention may be a text, a picture/photo, a video, or the like. In the present invention, the embodiments are described by using a video as an example, and other multimedia forms are similar to a video scenario, and details are not described herein. In a video watching scenario in the present invention, for example, an application scenario of watching live broadcast on line, watching rebroadcast on line, or watching a local video, to resolve a problem that only a single video watching manner is provided on a video website, a behavior change of a video viewer is monitored, specific content of a video is identified according to the behavior change of the video viewer, and the specific content is processed. Corresponding processing may be performed on the specific content of the video according to the behavior change of the video viewer, for example, video content is stored according to the behavior change of the video viewer, or video content is marked according to the behavior change of the video viewer. Therefore, multiple watching manners are provided, and intelligentization of human-computer interaction is improved.

Specific embodiments are used below to describe in detail the technical solutions of the present invention. The following several specific embodiments may be combined with each other, and a same or similar concept or process may not be described repeatedly in some embodiments.

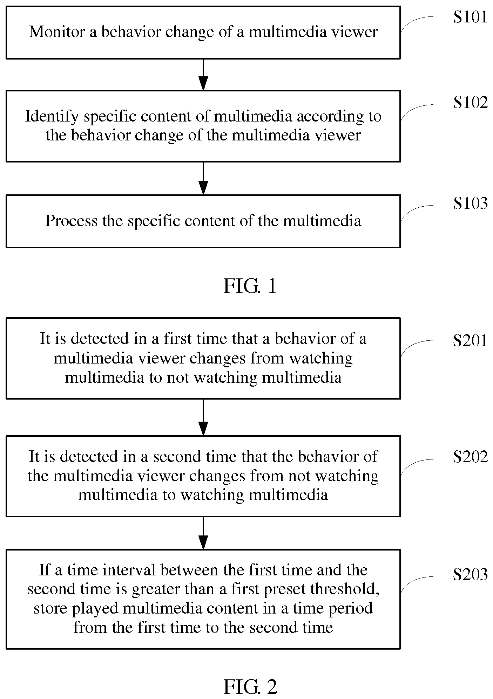

FIG. 1 is a schematic flowchart of Embodiment 1 of a multimedia processing method according to the present invention. As shown in FIG. 1, a video processing method in this embodiment includes the following steps.

S101. Monitor a behavior change of a multimedia viewer.

Specifically, in this embodiment, multimedia is played by using a multimedia player, and the multimedia player may be a user terminal having a multimedia playing function, such as a mobile phone, a tablet computer, or an in-vehicle computer.

Optionally, the behavior change of the multimedia viewer may be monitored by using a front-facing camera of the multimedia player.

The behavior change of the multimedia viewer is a behavior change made by the multimedia viewer during a multimedia watching process, which may be: a behavior of the multimedia viewer changes from watching multimedia to not watching multimedia, or from not watching multimedia to watching multimedia; or an emotional expression of the multimedia viewer changes from being calm to being uncalm, or from being uncalm to being calm.

S102. Identify specific content of multimedia according to the behavior change of the multimedia viewer.

Specifically, the multimedia player can determine the specific content of the multimedia according to the behavior change of the multimedia viewer. The specific content of the multimedia may be content or a highlight missed by the multimedia viewer. For example, if it is detected that the emotional expression of the multimedia viewer changes from being calm to being uncalm, and then from being uncalm to being calm, multimedia content in this time period is identified as the specific content.

S103. Process the specific content of the multimedia.

Specifically, the multimedia player processes the specific content of the multimedia, for example, the multimedia player stores or marks determined specific content of the multimedia.

According to the multimedia processing method in this embodiment, a behavior change of a multimedia viewer is monitored, specific content of multimedia is identified according to the behavior change of the multimedia viewer, and the specific content of the multimedia is processed. Corresponding processing may be performed on the specific content of the multimedia according to the behavior change of the multimedia viewer. Therefore, multiple watching manners are provided, and intelligentization of human-computer interaction is improved.

Further, on the basis of foregoing embodiment, S103 specifically includes: storing the specific content of the multimedia according to the behavior change of the multimedia viewer; or marking the specific content of the multimedia according to the behavior change of the multimedia viewer.

Storing the specific content of the multimedia according to the behavior change of the multimedia viewer may be applied in a scenario of watching live multimedia on line, for example, may be applied in a scenario of watching a live video. When a behavior of the multimedia viewer changes from watching multimedia to not watching multimedia, and then from not watching multimedia to watching multimedia, multimedia in a time period during which the multimedia viewer is away is stored. When the behavior of the multimedia viewer changes to watching multimedia, the multimedia viewer is reminded of whether to watch the stored multimedia. This resolves a problem that a video viewer misses a video because of leaving away in a process of watching a live program on line. Specific implementation manners are shown in FIG. 2.

FIG. 2 is a schematic flowchart of Embodiment 2 of a multimedia processing method according to the present invention. The multimedia processing method in this embodiment includes the following steps.

S201. It is detected in a first time that a behavior of a multimedia viewer changes from watching multimedia to not watching multimedia.

When there is one multimedia viewer, by monitoring a change of an included angle between a facial image of the multimedia viewer and a screen of a multimedia player, a change of a distance between a facial image of the multimedia viewer and a screen, or a change of a line of sight of the multimedia viewer, it may be detected that the behavior of the multimedia viewer changes from watching multimedia to not watching multimedia.

Specifically, if it is detected that an included angle between a facial image of the multimedia viewer and a screen of a multimedia player changes from being less than or equal to a first preset angle to being greater than the first preset angle, it is determined that the behavior of the multimedia viewer changes from watching multimedia to not watching multimedia. The included angle between the facial image of the multimedia viewer and the screen of the multimedia player is an included angle between a plane on which the facial image of the multimedia viewer is located and a plane on which the screen of the multimedia player is located. The first preset angle is preset in the multimedia player. Being less than or equal to the first preset angle indicates that the multimedia viewer can clearly see multimedia played on the screen of the multimedia player, and being greater than the first preset angle indicates that the multimedia viewer cannot clearly see the multimedia. The first preset angle may be obtained by using empirical data, or may be obtained by means of experiment. For example, the multimedia viewer may adjust the included angle between the facial image and the screen in front of the screen of the multimedia player. An included angle between the facial image and the screen obtained when the multimedia viewer just cannot see the multimedia is the first preset angle.

Alternatively, if it is detected that a distance between a facial image of the multimedia viewer and a screen of a multimedia player changes from being less than or equal to a first preset distance to being greater than the first preset distance, it is determined that the behavior of the multimedia viewer changes from watching multimedia to not watching multimedia. The first preset distance is preset in the multimedia player. Being less than or equal to the first preset distance indicates that the multimedia viewer can clearly see multimedia played on the screen of the multimedia player, and being greater than the first preset distance indicates that the multimedia viewer cannot clearly see the multimedia. The distance between the facial image of the multimedia viewer and the screen may be measured by using a distance sensor.

Alternatively, if it is detected that a line of sight of a multimedia viewer changes from being within a display area of a screen of a multimedia player to being out of the display area of the screen, it is determined that the behavior of the multimedia viewer changes from watching multimedia to not watching multimedia. The line of sight of the multimedia viewer being within the display area of the screen of the multimedia player indicates that the multimedia viewer can clearly see multimedia played on the screen, and the line of sight of the multimedia viewer being out of the display area of the screen indicates that the multimedia viewer cannot clearly see the multimedia. Monitoring the line of sight of the multimedia viewer may be implemented by tracking an eye movement track of the multimedia viewer.

If any one of the foregoing three cases is met, it is considered that the behavior of the multimedia viewer changes from watching multimedia to not watching multimedia.

When there are at least two multimedia viewers, by monitoring multimedia viewers of a quantity, included angles between whose facial images and a screen change, or a quantity of persons, distances between whose facial images and a screen change, or multimedia viewers of a quantity, whose lines of sight change, it may be detected that the behavior of the multimedia viewer changes from watching multimedia to not watching multimedia.

Specifically, if it is detected that included angles between facial images of a quantity of persons in the multimedia viewers and a screen of a multimedia player change from being less than or equal to a first preset angle to being greater than the first preset angle, where the quantity is greater than a preset quantity of persons, it is determined that the behavior of the multimedia viewer changes from watching multimedia to not watching multimedia.

Alternatively, if it is detected that distances between facial images of a quantity of persons in the multimedia viewers and a screen of a multimedia player change from being less than or equal to a first preset distance to being greater than the first preset distance, where the quantity is greater than a preset quantity of persons, it is determined that the behavior of the multimedia viewer changes from watching multimedia to not watching multimedia.

Alternatively, if it is detected that lines of sight of a quantity of persons in the multimedia viewers change from being within a display area of a screen to being out of the display area of the screen, where the quantity is greater than a preset quantity of persons, it is determined that the behavior of the multimedia viewer changes from watching multimedia to not watching multimedia.

It should be noted that the preset quantity of persons may be a fixed quantity of persons that is set in the multimedia player, or may be a quantity of multimedia viewers who watch multimedia at the very beginning, or may be a quantity of persons that is set according to a ratio of the quantity of persons who watch multimedia at the very beginning. When the preset quantity of persons is one, it indicates that if included angles between facial images of at least two persons in the multimedia viewers and the screen of the multimedia player change from being less than or equal to the first preset angle to being greater than the first preset angle, it is considered that the behavior of the multimedia viewer changes from watching multimedia to not watching multimedia. When the preset quantity of persons is zero, it indicates that if an included angle between a facial image of at least one person in the multimedia viewers and the screen of the multimedia player changes from being less than or equal to the first preset angle to being greater than the first preset angle, it is considered that the behavior of the multimedia viewer changes from watching multimedia to not watching multimedia.

For example, when there are 21 persons who watch multimedia at the very beginning, the preset quantity of persons may be seven. This indicates that only when it is detected that included angles between facial images of more than seven persons in the 21 multimedia viewers and the screen change from being less than or equal to the first preset angle to being greater than the first preset angle, distances between facial images of more than seven persons in the 21 multimedia viewers and the screen change from being less than or equal to the first preset distance to being greater than the first preset distance, or lines of sight of more than seven persons in the 21 multimedia viewers change from being within the display area of the screen to being out of the display area of the screen, it is considered that the behavior of the multimedia viewer changes from watching multimedia to not watching multimedia.

An included angle between a facial image of each multimedia viewer in at least two multimedia viewers and a screen, a distance between the facial image of each multimedia viewer in the at least two multimedia viewers and the screen, or a line of sight of each multimedia viewer in the at least two multimedia viewers is monitored.

If any one of the foregoing three cases is met, it is considered that the behavior of the multimedia viewer changes from watching multimedia to not watching multimedia.

S202. It is detected in a second time that the behavior of the multimedia viewer changes from not watching multimedia to watching multimedia.

When there is one multimedia viewer, specifically, if it is detected that an included angle between a facial image of the multimedia viewer and a screen of a multimedia player changes from being greater than a first preset angle to being less than or equal to the first preset angle, it is determined that the behavior of the multimedia viewer changes from not watching multimedia to watching multimedia.

It should be noted that if no multimedia viewer is detected, the included angle between the facial image of the multimedia viewer and the screen is greater than the first preset angle by default.

Alternatively, if it is detected that a distance between a facial image of the multimedia viewer and a screen of a multimedia player changes from being greater than a first preset distance to being less than or equal to the first preset distance, it is determined that the behavior of the multimedia viewer changes from not watching multimedia to watching multimedia.

It should be noted that if no multimedia viewer is detected, the distance between the facial image of the multimedia viewer and the screen is greater than the first preset distance by default.

Alternatively, if it is detected that a line of sight of the multimedia viewer changes from being out of a display area of a screen to being within the display area of the screen, it is determined that the behavior of the multimedia viewer changes from not watching multimedia to watching multimedia.

It should be noted that if no multimedia viewer is detected, the line of sight of the multimedia viewer is out of the display area of the screen by default.

When there are at least two multimedia viewers, specifically, if it is detected that included angles between facial images of a quantity of persons in the multimedia viewers and a screen of a multimedia player change from being greater than a first preset angle to being less than or equal to the first preset angle, where the quantity is greater than a preset quantity of persons, it is determined that the behavior of the multimedia viewer changes from not watching multimedia to watching multimedia.

Alternatively, if it is detected that distances between facial images of a quantity of persons in the multimedia viewers and a screen of a multimedia player change from being greater than a first preset distance to being less than or equal to the first preset distance, where the quantity is greater than a preset quantity of persons, it is determined that the behavior of the multimedia viewer changes from not watching multimedia to watching multimedia.

Alternatively, if it is detected that lines of sight of a quantity of persons in the multimedia viewers change from being out of a display area of a screen to being within the display area of the screen, where the quantity is greater than a preset quantity of persons, it is determined that the behavior of the multimedia viewer changes from not watching multimedia to watching multimedia.

It should be noted that the preset quantity of persons in this step may be the same as or different from that in S201.

S203. If a time interval between the first time and the second time is greater than a first preset threshold, store played multimedia content in a time period from the first time to the second time.

Specifically, when the time interval between the first time and the second time is greater than the first preset threshold, it is considered that the multimedia viewer misses a section of multimedia, and the played multimedia content in the time period from the first time to the second time is stored. The multimedia player may download the multimedia that is in the time period from the first time to the second time from a multimedia website server for storage.

If the time interval between the first time and the second time is less than the first preset threshold, when there is one multimedia viewer, it is considered that in the time interval between the first time and the second time, the multimedia viewer may deduce missed multimedia content according to a context of the multimedia; when there are at least two multimedia viewers, it is considered that in the time interval between the first time and the second time, the multimedia viewer may learn the missed multimedia content from explanation by another multimedia viewer.

It should be noted that the multimedia player may store played multimedia content from the first time, and if the time interval between the first time and the second time is less than the first preset threshold, the played multimedia content stored from the first time is deleted.

The played multimedia content stored from the first time to the second time is played for the multimedia viewer when it is detected that the behavior of the multimedia viewer changes from not watching multimedia to watching multimedia. Specifically, the multimedia viewer may be reminded of whether to watch the played multimedia content that is stored in a time period from the first time to the second time. When the multimedia viewer chooses to watch the played multimedia content that is stored in the time period from the first time to the second time, the stored multimedia content is played. An independent window may be used for playing to prevent normal watching of the multimedia from being affected.

The multimedia processing method provided in this embodiment may be applied in a scenario of watching live multimedia on line, and when it is detected in a first time that a behavior of a multimedia viewer changes from watching multimedia to not watching multimedia, and it is detected in a second time that the behavior of the multimedia viewer changes from not watching multimedia to watching multimedia, and a time interval between the first time and the second time is greater than a first preset threshold, played multimedia content in a time period from the first time to the second time is stored. Therefore, a problem that a multimedia viewer misses multimedia because of leaving away for a period of time in a process of watching live multimedia on line is resolved, and intelligentization of human-computer interaction is improved.

Further, on the basis of Embodiment 2, when there is one multimedia viewer, before S202, the method further includes: determining that the multimedia viewer detected in the second time and the multimedia viewer detected in the first time are a same viewer. When there are at least two multimedia viewers, before S202, the method further includes: determining that the multimedia viewers, detected in the second time, whose behaviors change from not watching multimedia to watching multimedia and the multimedia viewers, detected in the first time, whose behaviors change from watching multimedia to not watching multimedia are a same group of viewers. Specifically, whether the multimedia viewer detected in the second time and the multimedia viewer detected in the first time are the same viewer, or whether the multimedia viewers, detected in the second time, whose behaviors change from not watching multimedia to watching multimedia and the multimedia viewers, detected in the first time, whose behaviors change from watching multimedia to not watching multimedia are the same group of viewers may be determined by comparing goodness of fit of five sense organs of the multimedia viewers detected in the second time and the multimedia viewers detected in the first time.

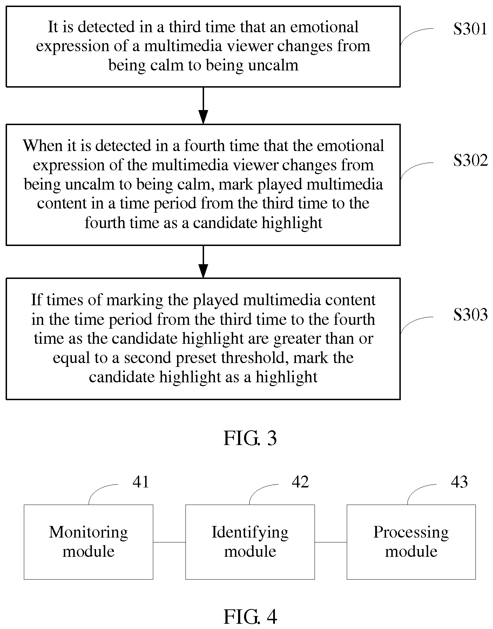

Marking the specific content of the multimedia according to the behavior change of the multimedia viewer may be applied in a scenario of watching rebroadcast multimedia on line or watching local multimedia. In a process of watching multimedia content, a behavior of a multimedia viewer varies according to multimedia content. For example, if there is relatively exciting multimedia content, the multimedia viewer has relatively rich emotional expressions, and corresponding multimedia content is marked according to the behavior of the multimedia viewer. In a subsequent process of watching multimedia, the multimedia viewer may select, according to a marking result, multimedia for watching. This resolves a problem that a multimedia viewer cannot directly locate a highlight. As shown in FIG. 3, FIG. 3 is a schematic flowchart of Embodiment 3 of a multimedia processing method according to the present invention. The multimedia processing method in this embodiment includes the following steps.

S301. It is detected in a third time that an emotional expression of a multimedia viewer changes from being calm to being uncalm.

Specifically, monitoring of the emotional expression change of the multimedia viewer from being calm to being uncalm may be implemented by monitoring whether a facial congestion status of the multimedia viewer exceeds a third preset threshold, or by monitoring whether a change degree of an eye movement track of the multimedia viewer exceeds a fourth preset threshold. When the facial congestion status of the multimedia viewer changes from being less than or equal to the third preset threshold to being greater than the third preset threshold, or when it is detected that the change degree of the eye movement track of the multimedia viewer changes from being less than or equal to the fourth preset threshold to being greater than the fourth preset threshold, it is determined that the emotional expression of the multimedia viewer changes from being calm to being uncalm.

S302. When it is detected in a fourth time that the emotional expression of the multimedia viewer changes from being uncalm to being calm, mark played multimedia content in a time period from the third time to the fourth time as a candidate highlight.

Specifically, when it is detected that the facial congestion status of the multimedia viewer changes from being greater than the third preset threshold to being less than or equal to the third preset threshold, or when it is detected that the change degree of the eye movement track of the multimedia viewer changes from being greater than the fourth preset threshold to being less than or equal to the fourth preset threshold, it is determined that the emotional expression of the multimedia viewer changes from being uncalm to being calm. The played multimedia content in the time period from the third time to the fourth time is marked as the candidate highlight. When there is one multimedia viewer, the played multimedia content in the time period from the third time to the fourth time is marked once; when there are at least two multimedia viewers, and when it is detected that in the third time, emotional expressions of multimedia viewers of a quantity change from being calm to being uncalm, and in the fourth time, emotional expressions of multimedia viewers of the quantity change from being uncalm to being calm in the fourth time, the played multimedia content in the time period from the third time to the fourth time is marked for several times.

S303. If times of marking the played multimedia content in the time period from the third time to the fourth time as the candidate highlight are greater than or equal to a second preset threshold, mark the candidate highlight as a highlight.

Specifically, the second preset threshold may be determined according to total play times of multimedia. For example, the second preset threshold may be a half of the total play times of the multimedia, that is, if the times of marking the played multimedia content that is in the time period from the third time to the fourth time as the candidate highlight are greater than the half of the total play times of the multimedia, the candidate highlight is marked as the highlight.

A play heat curve of the multimedia may be generated according to a time interval of the highlight in play progress of the multimedia, or a multimedia thumbnail in the time interval may be generated in the time interval of the highlight in the play progress of the multimedia to mark the candidate highlight as the highlight.

Specifically, the play heat curve of the multimedia may be generated by using the play progress of the multimedia as horizontal coordinates and using the times of marking the multimedia as the candidate highlight as vertical coordinates. The play heat curve of the multimedia may also be generated by using the play progress of the multimedia as horizontal coordinates and using the multimedia marked as the highlight as vertical coordinates, and according to the time interval of highlight in the play progress of the multimedia.

Alternatively, in the time interval of the highlight in the play progress of the multimedia, the multimedia thumbnail in the time interval is generated, that is, a thumbnail of the highlight is generated.

The multimedia processing method provided in this embodiment may be specifically applied in the scenario of watching rebroadcast multimedia on line or watching local multimedia. When the multimedia processing method is applied in the scenario of watching rebroadcast multimedia on line, the multimedia player marks the played multimedia content in the time period from the third time and the fourth time according to the detected behavior of the multimedia viewer, and sends marked data to a multimedia website server, and the website server marks the candidate highlight as the highlight according to the data sent by the multimedia player and the second preset threshold, and by generating a play heat curve of the multimedia or by generating a multimedia thumbnail in the time interval. Based on a statistical law, more times of playing multimedia bring more precise marking of a highlight.

According to the multimedia processing method in this embodiment, when it is detected in a third time that an emotional expression of a multimedia viewer changes from being calm to being uncalm, and it is detected in a fourth time that the emotional expression of the multimedia viewer changes from being uncalm to being calm, played multimedia content in a time period from the third time to the fourth time is marked as a candidate highlight; and if times of marking the played multimedia content in the time period from the third time to the fourth time as the candidate highlight are greater than or equal to a second preset threshold, the candidate highlight is marked as a highlight. Therefore, a multimedia viewer may quickly locate a highlight of multimedia, and intelligentization of human-computer interaction is improved.

FIG. 4 is a schematic structural diagram of Embodiment 1 of a multimedia processing apparatus according to the present invention. As shown in FIG. 4, the multimedia processing apparatus provided in this embodiment includes: a monitoring module 41, configured to monitor a behavior change of a multimedia viewer; an identifying module 42, configured to identify specific content of multimedia according to the behavior change of the multimedia viewer; and a processing module 43, configured to process the specific content of the multimedia.

Specifically, the apparatus provided in this embodiment may be correspondingly configured to implement the technical solution in the method embodiment shown in FIG. 1. Implementation principles are similar, and details are not described herein again.

According to the multimedia processing apparatus in this embodiment, a monitoring module monitors a behavior change of a multimedia viewer, an identifying module determines specific content of multimedia, and a processing module processes the specific content of the multimedia. Corresponding processing may be performed on the specific content of the multimedia according to the behavior change of the multimedia viewer. Therefore, multiple watching manners are provided, and intelligentization of human-computer interaction is improved.

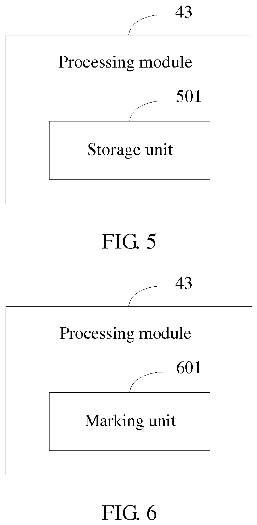

FIG. 5 is a schematic structural diagram of Embodiment 2 of a multimedia processing apparatus according to the present invention. As shown in FIG. 5, on the basis of Embodiment 1, the processing module 43 includes: a storage unit 501, configured to store the specific content of the multimedia according to the behavior change of the multimedia viewer.

Specifically, the storage unit 501 is specifically configured to: if the monitoring module 41 detects in a first time that a behavior of the multimedia viewer changes from watching multimedia to not watching multimedia, and it is detected in a second time that the behavior of the multimedia viewer changes from not watching multimedia to watching multimedia, and if a time interval between the first time and the second time is greater than a first preset threshold, store played multimedia content in a time period from the first time to the second time.

When there is one multimedia viewer, the monitoring module 41 is specifically configured to: if it is detected that an included angle between a facial image of the multimedia viewer and a screen of a multimedia player changes from being less than or equal to a first preset angle to being greater than the first preset angle, determine that the behavior of the multimedia viewer changes from watching multimedia to not watching multimedia.

Alternatively, the monitoring module 41 is specifically configured to: if it is detected that a distance between a facial image of the multimedia viewer and a screen of a multimedia player changes from being less than or equal to a first preset distance to being greater than the first preset distance, determine that the behavior of the multimedia viewer changes from watching multimedia to not watching multimedia.

Alternatively, the monitoring module 41 is specifically configured to: if it is detected that a line of sight of the multimedia viewer changes from being within a display area of a screen to being out of the display area of the screen, determine that the behavior of the multimedia viewer changes from watching multimedia to not watching multimedia.

The monitoring module 41 is specifically configured to: if it is detected that the included angle between the facial image of the multimedia viewer and the screen of the multimedia player changes from being greater than the first preset angle to being less than or equal to the first preset angle, determine that the behavior of the multimedia viewer changes from not watching multimedia to watching multimedia.

Alternatively, the monitoring module 41 is specifically configured to: if it is detected that the distance between the facial image of the multimedia viewer and the screen of the multimedia player changes from being greater than the first preset distance to being less than or equal to the first preset distance, determine that the behavior of the multimedia viewer changes from not watching multimedia to watching multimedia.

Alternatively, the monitoring module 41 is specifically configured to: if it is detected that the line of sight of the multimedia viewer changes from being out of the display area of the screen to being within the display area of the screen, determine that the behavior of the multimedia viewer changes from not watching multimedia to watching multimedia.

The monitoring module 41 is further configured to determine that the multimedia viewer detected in the second time and the multimedia viewer detected in the first time are a same viewer.

When there are at least two multimedia viewers, the monitoring module 41 is specifically configured to: if it is detected that included angles between facial images of a quantity of persons in the multimedia viewers and a screen of a multimedia player change from being less than or equal to a first preset angle to being greater than the first preset angle, where the quantity is greater than a preset quantity of persons, determine that the behavior of the multimedia viewer changes from watching multimedia to not watching multimedia.

Alternatively, the monitoring module 41 is specifically configured to: if it is detected that distances between facial images of a quantity of persons in the multimedia viewers and a screen of a multimedia player change from being less than or equal to a first preset distance to being greater than the first preset distance, where the quantity is greater than a preset quantity of persons, determine that the behavior of the multimedia viewer changes from watching multimedia to not watching multimedia.

Alternatively, the monitoring module 41 is specifically configured to: if it is detected that lines of sight of a quantity of persons in the multimedia viewers change from being within a display area of a screen to being out of the display area of the screen, where the quantity is greater than a preset quantity of persons, determine that the behavior of the multimedia viewer changes from watching multimedia to not watching multimedia.

The monitoring module 41 is specifically configured to: if it is detected that the included angles between the facial images of persons of the quantity in the multimedia viewers and the screen of the multimedia player change from being greater than the first preset angle to being less than or equal to the first preset angle, where the quantity is greater than the preset quantity of persons, determine that the behavior of the multimedia viewer changes from not watching multimedia to watching multimedia.

Alternatively, the monitoring module 41 is specifically configured to: if it is detected that the distances between the facial images of persons of the quantity in the multimedia viewers and the screen of the multimedia player change from being greater than the first preset distance to being less than or equal to the first preset distance, where the quantity is greater than the preset quantity of persons, determine that the behavior of the multimedia viewer changes from not watching multimedia to watching multimedia.

Alternatively, the monitoring module 41 is specifically configured to: if it is detected that lines of sight of a quantity of persons in the multimedia viewers change from being out of the display area of the screen to being within the display area of the screen, where the quantity is greater than the preset quantity of persons, determine that the behavior of the multimedia viewer changes from not watching multimedia to watching multimedia.

Specifically, the apparatus provided in this embodiment may be correspondingly configured to implement the technical solution in the method embodiment shown in FIG. 2. Implementation principles are similar, and details are not described herein again.

The multimedia processing apparatus according to this embodiment may be applied in a scenario of watching live multimedia on line. A storage unit is specifically configured to: if it is detected in a first time that a behavior of a multimedia viewer changes from watching multimedia to not watching multimedia, and it is detected in a second time that the behavior of the multimedia viewer changes from not watching multimedia to watching multimedia, and if a time interval between the first time and the second time is greater than a first preset threshold, store played multimedia content in a time period from the first time to the second time. Therefore, a problem that a multimedia viewer misses multimedia because of leaving away for a period of time in a process of watching live multimedia on line is resolved, and intelligentization of human-computer interaction is improved.

FIG. 6 is a schematic structural diagram of Embodiment 3 of a multimedia processing apparatus according to the present invention. As shown in FIG. 6, on the basis of Embodiment 1, the processing module 43 includes: a marking unit 601, configured to mark the specific content of the multimedia according to the behavior change of the multimedia viewer.

Specifically, the marking unit 601 is specifically configured to: if the monitoring module 41 detects in a third time that an emotional expression of the multimedia viewer changes from being calm to being uncalm, and detects in a fourth time that the emotional expression of the multimedia viewer changes from being uncalm to being calm, mark played multimedia content in a time period from the third time to the fourth time as a candidate highlight; and if times of marking the played multimedia content in the time period from the third time to the fourth time as the candidate highlight are greater than or equal to a second preset threshold, mark the candidate highlight as a highlight.

The marking unit 601 is specifically configured to generate a play heat curve of the multimedia according to a time interval of a highlight in play progress of the multimedia.

Alternatively, the marking unit is specifically configured to generate a multimedia thumbnail in the time interval in the time interval of the highlight in the play progress of the multimedia.

The apparatus provided in this embodiment may be correspondingly configured to implement the technical solution in the method embodiment shown in FIG. 3. Implementation principles are similar, and details are not described herein again.

According to the multimedia processing apparatus in this embodiment, a marking unit is specifically configured to: if a monitoring module detects in a third time that an emotional expression of a multimedia viewer changes from being calm to being uncalm, and detects in a fourth time that the emotional expression of the multimedia viewer changes from being uncalm to being calm, mark played multimedia content in a time period from the third time to the fourth time as a candidate highlight; and if times of marking the played multimedia content in the time period from the third time to the fourth time as the candidate highlight are greater than or equal to a second preset threshold, mark the candidate highlight as a highlight. Therefore, a multimedia viewer may quickly locate a highlight of multimedia, and intelligentization of human-computer interaction is improved.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A multimedia processing method, comprising:
monitoring a behavior change of a multimedia viewer;
identifying specific content of multimedia according to the behavior change of the multimedia viewer; and
processing the specific content of the multimedia.

2. The method according to claim 1, wherein the processing the specific content of the multimedia comprises:
storing the specific content of the multimedia according to the behavior change of the multimedia viewer; or
marking the specific content of the multimedia according to the behavior change of the multimedia viewer.

3. The method according to claim 2, wherein the storing the specific content of the multimedia according to the behavior change of the multimedia viewer comprises:
if it is detected in a first time that a behavior of the multimedia viewer changes from watching multimedia to not watching multimedia, and it is detected in a second time that the behavior of the multimedia viewer changes from not watching multimedia to watching multimedia, and if a time interval between the first time and the second time is greater than a first preset threshold, storing multimedia content in a time period from the first time to the second time.

4. The method according to claim 3, wherein when there is one multimedia viewer,
the detecting that a behavior of the multimedia viewer changes from watching multimedia to not watching multimedia comprises:
if it is detected that an included angle between a facial image of the multimedia viewer and a screen of a multimedia player changes from being less than or equal to a first preset angle to being greater than the first preset angle, determining that the behavior of the multimedia viewer changes from watching multimedia to not watching multimedia; or
if it is detected that a distance between a facial image of the multimedia viewer and a screen of the multimedia player changes from being less than or equal to a first preset distance to being greater than the first preset distance, determining that the behavior of the multimedia viewer changes from watching multimedia to not watching multimedia; or
if it is detected that a line of sight of the multimedia viewer changes from being within a display area of the screen to being out of the display area of the screen, determining that the behavior of the multimedia viewer changes from watching multimedia to not watching multimedia; and
the detecting that the behavior of the multimedia viewer changes from not watching multimedia to watching multimedia comprises:
if it is detected that an included angle between a facial image of the multimedia viewer and a screen of a multimedia player changes from being greater than a first preset angle to being less than or equal to the first preset angle, determining that the behavior of the multimedia viewer changes from not watching multimedia to watching multimedia; or
if it is detected that a distance between a facial image of the multimedia viewer and the screen of the multimedia player changes from being greater than a first preset distance to being less than or equal to the first preset distance, determining that the behavior of the multimedia viewer changes from not watching multimedia to watching multimedia; or
if it is detected that a line of sight of the multimedia viewer changes from being out of a display area of the screen to being within the display area of the screen, determining that the behavior of the multimedia viewer changes from not watching multimedia to watching multimedia.

5. The method according to claim 4, before the detecting in a second time that the behavior of the multimedia viewer changes from not watching multimedia to watching multimedia, further comprising:
determining that the multimedia viewer detected in the second time and the multimedia viewer detected in the first time are a same viewer.

6. The method according to claim 3, wherein when there are at least two multimedia viewers,
the detecting that a behavior of the multimedia viewer changes from watching multimedia to not watching multimedia comprises:
if it is detected that included angles between facial images of a quantity of persons in the multimedia viewers and a screen of a multimedia player change from being less than or equal to a first preset angle to being greater than the first preset angle, wherein the quantity is greater than a preset quantity of persons, determining that the behavior of the multimedia viewer changes from watching multimedia to not watching multimedia; or
if it is detected that distances between facial images of a quantity of persons in the multimedia viewers and the screen of the multimedia player change from being less than or equal to a first preset distance to being greater than the first preset distance, wherein the quantity is greater than a preset quantity of persons, determining that the behavior of the multimedia viewer changes from watching multimedia to not watching multimedia; or
if it is detected that lines of sight of a quantity of persons in the multimedia viewers change from being within a display area of the screen to being out of the display area of the screen, wherein the quantity is greater than the preset quantity of persons, determining that the behavior of the multimedia viewer changes from watching multimedia to not watching multimedia; and
the detecting that the behavior of the multimedia viewer changes from not watching multimedia to watching multimedia comprises:
if it is detected that included angles between facial images of a quantity of persons in the multimedia viewers and a screen of a multimedia player change from being greater than a first preset angle to being less than or equal to the first preset angle, wherein the quantity is greater than a preset quantity of persons, determining that the behavior of the multimedia viewer changes from not watching multimedia to watching multimedia; or
if it is detected that distances between facial images of a quantity of persons in the multimedia viewers and the screen of the multimedia player change from being greater than a first preset distance to being less than or equal to the first preset distance, wherein the quantity is greater than the preset quantity of persons, determining that the behavior of the multimedia viewer changes from not watching multimedia to watching multimedia; or
if it is detected that lines of sight of a quantity of persons in the multimedia viewers change from being out of a display area of the screen to being within the display area of the screen, wherein the quantity is greater than the preset quantity of persons, determining that the behavior of the multimedia viewer changes from not watching multimedia to watching multimedia.

7. The method according to claim 2, wherein the marking the specific content of the multimedia according to the behavior change of the multimedia viewer comprises:
if it is detected in a third time that an emotional expression of the multimedia viewer changes from being calm to being uncalm, and it is detected in a fourth time that the emotional expression of the multimedia viewer changes from being uncalm to being calm, marking multimedia content in a time period from the third time to the fourth time as a candidate highlight; and
if times of marking the multimedia content in the time period from the third time to the fourth time as the candidate highlight are greater than or equal to a second preset threshold, marking the candidate highlight as a highlight.

8. The method according to claim 7, wherein the marking the candidate highlight as a highlight comprises:
generating a play heat curve of the multimedia according to a time interval of the highlight in play progress of the multimedia; or
generating a multimedia thumbnail in the time interval of the highlight in the play progress of the multimedia.

9. A multimedia processing apparatus, comprising:
a monitoring module, configured to monitor a behavior change of a multimedia viewer;
an identifying module, configured to identify specific content of multimedia according to the behavior change of the multimedia viewer; and
a processing module, configured to process the specific content of the multimedia.

10. The apparatus according to claim 9, wherein the processing module comprises:
a storage unit, configured to store the specific content of the multimedia according to the behavior change of the multimedia viewer; or
a marking unit, configured to mark the specific content of the multimedia according to the behavior change of the multimedia viewer.

11. The apparatus according to claim 10, wherein the storage unit is specifically configured to: if the monitoring module detects in a first time that a behavior of the multimedia viewer changes from watching multimedia to not watching multimedia, and detects in a second time that the behavior of the multimedia viewer changes from not watching multimedia to watching multimedia, and if a time interval between the first time and the second time is greater than a first preset threshold, store multimedia content in a time period from the first time to the second time.

12. The apparatus according to claim 11, wherein when there is one multimedia viewer,
the monitoring module is specifically configured to: if it is detected that an included angle between a facial image of the multimedia viewer and a screen of a multimedia player changes from being less than or equal to a first preset angle to being greater than the first preset angle, determine that the behavior of the multimedia viewer changes from watching multimedia to not watching multimedia; or
the monitoring module is specifically configured to: if it is detected that a distance between a facial image of the multimedia viewer and the screen of the multimedia player changes from being less than or equal to a first preset distance to being greater than the first preset distance, determine that the behavior of the multimedia viewer changes from watching multimedia to not watching multimedia; or
the monitoring module is specifically configured to: if it is detected that a line of sight of the multimedia viewer changes from being within a display area of the screen to being out of the display area of the screen, determine that the behavior of the multimedia viewer changes from watching multimedia to not watching multimedia; and
the monitoring module is specifically configured to: if it is detected that an included angle between a facial image of the multimedia viewer and a screen of a multimedia player changes from being greater than a first preset angle to being less than or equal to the first preset angle, determine that the behavior of the multimedia viewer changes from not watching multimedia to watching multimedia; or
the monitoring module is specifically configured to: if it is detected that a distance between a facial image of the multimedia viewer and the screen of the multimedia player changes from being greater than a first preset distance to being less than or equal to the first preset distance, determine that the behavior of the multimedia viewer changes from not watching multimedia to watching multimedia; or
the monitoring module is specifically configured to: if it is detected that a line of sight of the multimedia viewer changes from being out of a display area of the screen to being within the display area of the screen, determine that the behavior of the multimedia viewer changes from not watching multimedia to watching multimedia.

13. The apparatus according to claim 12, wherein the monitoring module is further configured to determine that the multimedia viewer detected in the second time and the multimedia viewer detected in the first time are a same viewer.

14. The apparatus according to claim 11, wherein when there are at least two multimedia viewers,
the monitoring module is specifically configured to: if it is detected that included angles between facial images of a quantity of persons in the multimedia viewers and a screen of a multimedia player change from being less than or equal to a first preset angle to being greater than the first preset angle, wherein the quantity is greater than a preset quantity of persons, determine that the behavior of the multimedia viewer changes from watching multimedia to not watching multimedia; or
the monitoring module is specifically configured to: if it is detected that distances between facial images of a quantity of persons in the multimedia viewers and the screen of the multimedia player change from being less than or equal to a first preset distance to being greater than the first preset distance, wherein the quantity is greater than the preset quantity of persons, determine that the behavior of the multimedia viewer changes from watching multimedia to not watching multimedia; or
the monitoring module is specifically configured to: if it is detected that lines of sight of a quantity of persons in the multimedia viewers change from being within a display area of the screen to being out of the display area of the screen, wherein the quantity is greater than the preset quantity of persons, determine that the behavior of the multimedia viewer changes from watching multimedia to not watching multimedia; and
the monitoring module is specifically configured to: if it is detected that included angles between facial images of a quantity of persons in the multimedia viewers and a screen of a multimedia player change from being greater than a first preset angle to being less than or equal to the first preset angle, wherein the quantity is greater than a preset quantity of persons, determine that the behavior of the multimedia viewer changes from not watching multimedia to watching multimedia; or
the monitoring module is specifically configured to: if it is detected that distances between facial images of a quantity of persons in the multimedia viewers and the screen of the multimedia player change from being greater than a first preset distance to being less than or equal to the first preset distance, wherein the quantity is greater than the preset quantity of persons, determine that the behavior of the multimedia viewer changes from not watching multimedia to watching multimedia; or
the monitoring module is specifically configured to: if it is detected that lines of sight of a quantity of persons in the multimedia viewers change from being out of a display area of the screen to being within the display area of the screen, wherein the quantity is greater than the preset quantity of persons, determine that the behavior of the multimedia viewer changes from not watching multimedia to watching multimedia.

15. The apparatus according to claim 10, wherein the marking unit is specifically configured to: if the monitoring module detects in a third time that an emotional expression of the multimedia viewer changes from being calm to being uncalm, and detects in a fourth time that the emotional expression of the multimedia viewer changes from being uncalm to being calm, mark multimedia content in a time period from the third time to the fourth time as a candidate highlight; and if times of marking the multimedia content in the time period from the third time to the fourth time as the candidate highlight are greater than or equal to a second preset threshold, mark the candidate highlight as a highlight.

16. The apparatus according to claim 15, wherein the marking unit is specifically configured to generate a play heat curve of the multimedia according to a time interval of the highlight in play progress of the multimedia; or
the marking unit is specifically configured to generate a multimedia thumbnail in the time interval in the time interval of the highlight in the play progress of the multimedia.
